Europäisches Patentamt

European Patent Office

Office européen des brevets

(11) Publication number: **0 071 418**

**A2**

# (12) EUROPEAN PATENT APPLICATION

(21) Application number: **82303876.5**

(22) Date of filing: **22.07.82**

(51) Int. Cl.³: **A 22 C 25/18**

(30) Priority: **24.07.81 US 286507**

(43) Date of publication of application:
**09.02.83 Bulletin 83/6**

(84) Designated Contracting States:
**AT BE CH DE FR GB IT LI LU NL SE**

(71) Applicant: **Castle & Cooke, Inc.**
**P.O. Box 3928 50 California Street**
**San Francisco California 94119(US)**

(72) Inventor: **Jermann, Fred**
**388 Jerome Street**
**Astoria Oregon(US)**

(74) Representative: **Allam, Peter Clerk et al,**
**LLOYD WISE, TREGEAR & CO. Norman House 105-109**
**Strand**
**London WC2R 0AE(GB)**

(54) **Fish head butchering machine.**

(57) Fish heads, discharged from conventional fish viscerating and butchering machines, contain residual amounts of premium quality meat which heretofore has been rendered to a relatively low use in the production of fish oil. This is prevented by serially conveying severed fish heads to a saw. Serial conveyance occurs in fish head shaped jigs, which preferably are placed on an endless belt whereby each jig has an elongate path of approach to a saw. The jigs are positioned so that they pass the severed portion of the head immediate to a downwardly stroking band saw blade. Each jig is configured to receive an average size of fish heads in a specific case to hold and maintain the head of a four pound sockeye salmon. The jigs preferably are fashioned of wood and molded to a particular shape herein disclosed which is a wedging configuration of the lower range fish head to be encountered. Heads are placed into the jig from the enlarged portion to the narrowing portion of the jig where they wedge in place. This wedging has been found to be self-dimensioning. Severance of the exposed steaks at the band saw occurs with turning of the blocks on the endless belt discharging the heads.

1

7033-22/CCCC09E

# FISH HEAD BUTCHERING MACHINE

## Summary of the Prior Art

The butchering of fish is an automated process. Premium table fish, such as salmon, are butchered under economics wherein the relatively high cost of labor is off set against the high price that premium salmon steaks can bring the butchering facility. Fish, such as salmon, are typically flowed from a belt or flume system to a bin in the butchering area. Fish are taken from the bottom of the bin onto a traveling chain at the rate of approximately 60 fish per minute. As the fish are conveyed along a conveyance path, the fish are oriented at right angles to the path of travel by means of a sharp bar that pushes the fish by grasping the gil cover. A knife severs the head from the body and the body is thereafter conveyed to a viscerating and butchering machine that cuts open the fish belly, removes the viscera, belly blood, and fins. Heretofore, the severed head has been ground and pumped along with other fish wastes to approved receiving waters, where it becomes of the marine food chain. Alternately, the ground material is used for oil production.

Unfortunately, the heads have heretofore included much premium meat. During the past 20 years, attempts to recover the meat have been made. Hand-cutting of the remaining meat has been tried and largely failed; the costs of recovery exceed the costs of meat recovered.

Machines which index the fish for head severance have been altered. Such alteration has even included experimentation with a double knife. Unfortunately, such double cuts have left less meat for canning.   This practice has been largely discarded.

Heretofore, one of the main problems with the development of a practical machine for the removal of meat from fish heads has been the holding of the heads. Specifically, no way of firmly positioning the fish head on a remote and firm basis has been developed.

The invention, in one aspect, provides apparatus for cutting excess meat from fish heads comprising in combination:  a saw having a moving blade;  a plurality of jigs, each jig having a generally V-shaped groove with a female cancavity therein for receiving in male and fitting relationship successive fish heads placed therein;  said jigs terminating in a cutting end for having the snout of a fish head confined with said jig and meat on said fish head cantilevered outwardly and beyond said fish head as confined within said jig;  means for conveying said jig at said cutting end past said band saw whereby severing of said cantilevered portion of said fish head beyond the cutting edge of said block occurs.

The invention also provides a process for severing meat from fish heads;  comprising providing a wooden block having a fish head receiving concavity configured therein;  providing a band saw for severing meat from said fish heads, placing said saw just beyond a terminus of said wooden block;  conveying said block along a conveyance path past a saw so that said saw passes immediate to said saw;  placing fish heads in said blocks prior to passage by said saw with the gil cover of said fish heads registered within said blocks and the severed portions of said fish heads to and towards said saw.

The invention further provides a jig for addressing a fish head having salvagable meat thereon for sawing comprising in combination: a wooden block; said block having a V-shaped groove configured therein, said V-shaped groove extending from one end of said block to the opposite end of said block, said block comprising wood having a fibrous and unpolished surface exposed to receive said fish head, said V-shaped groove tapering in female relationship to conform to the male shape of the head of said fish for receiving the snout of said fish within said block and cantilevering to an edge of said block the head portion having the meat to be salvaged therefrom.

Fish heads, discharged from conventional fish viscerating and butchering machines, contain residual amounts of premium quality meat which heretofore has been rendered to a relatively low use in the production of fish oil. This is prevented by serially conveying severed fish heads to a saw. In a specific embodiment serial conveyance occurs in fish head-shaped jigs which are placed on an endless belt. Each jig has an elongate path of approach to a saw. The jigs are positioned so that they pass the severed portion of the head immediate to -- about 1/8 inch from --- a downwardly stroking band saw blade. Each jig is configured to receive an average size of fish heads -- in this case to hold and maintain the head of a four pound sockeye salmon. The jigs are fashioned of wood and molded to a particular shape herein disclosed which is a wedging configuration of the lower range fish head to be encountered. Heads are placed into the jig from the enlarged portion to the narrowing portion of the jig where they wedge in place. This wedging has been found to be self-dimensioning. Severance of the exposed steaks at the band saw occurs with turning of the blocks on the endless belt discharging the heads.

A specific embodiment of this invention provides a high speed mechanized rig for salvaging residual meat from fish heads left by the positioning of an index machine. According to this aspect of the invention, a series of wooden jigs are conveyed on an endless belt. Each jig includes a female concavity having a complementary shape to a fish head. The snout of the fish is positioned to one end of the jig and the severed portion of the head cantilevered out and beyond the opposite end of the jig. By serially conveying the jigs with the cantilevered steaks past a band saw, severing of the excess meat occurs. Thereafter, the head continues to a portion where inversion of the jig occurs. At this point, the head is discharged from the jig.

An advantage of the jig and endless belt arrangement, it is that heads may be readily placed by an operator in the jig. Such placement can occur at locations remote from the severing saw. Safety above and beyond that obtained at a conventional sliming table for trimming meat from fish heads is realized.

Another specific embodiment of this invention discloses specifically the shape of a jig, which jig will accommodate the heads of sockeye salmon from four to eight pounds in overall dimension. According to this aspect of the invention, the jig is approximately six inches long, six inches high, and four inches wide. A V-shaped groove is generally cut from one end of the jig to the opposite end of the jig. The V at the upper or open end has the same dimension, being three inches wide. However, at the lower end of the V, the V penetrates the block to varying depths. The penetration includes sloping from approximately the medial end of the block at the forward portion to the lower one inch of the block at the rearward portion at an angle of about 15 degrees. At the leading edge of the block, the V is linear and opens at a wide angle. At the rearward end of the block, the V is deeper and is provided with arcuate sides. The arcuate sides define concavities and are provided with a radius of curvature which generally increases as the curvature begins at the bottom of the V and extends towards the top of the V. Ideally, the interior of the block is made of unfinished wood, it having been found that the texture and porosity of the wood -- preferably pine and/or birch -- maintains the severed fish head firmly during severance of the cantilevered portion of the steak which extends out and beyond the end of the jig.

An advantage of the disclosed jig is that it has been found to be self-positioning with respect to the fish heads. That is to say, fish heads ranging in size from the head of a four pound salmon to the head of an eight pound salmon can be positioned in the jig with rapid hand movement by wedging the fish head downwardly and forwardly into the jig. The head naturally comes to rest in the block. The gil cover of the fish is within the block. Beyond the terminus of the jig exposed for cutting is the fish steak to be salvaged. Precise and precision positioning of the head by a worker handloading the machine is materially assisted by the shape of the jig. Rapid placement of the head for serial severing of excess steaks is enabled.

As a feature of this invention there is disclosed a saw and jig combination in which firm holding of the fish head during severance of excess steaks occurs. According to this aspect of the invention, the fish head is positioned within a jig. The jig is thereafter passed by a downwardly moving saw blade. During the cutting process, minimal portions of the meat of the fish head come into contact with the blade. The frictional force of the cutting wedges the fish head more firmly into the wood jig. At the same time, any tendency of the cantilevered fish head to pivot from the jig is resisted.

The invention will be described further with reference to the attached drawings, in which:

Fig. 1 is a perspective view of a ; fish head cutting machine of this invention illustrating an endless chain belt between two sprockets; a series of fish head jigs disposed along the belt, a worker loading heads into the jigs at positions remote from a severing band saw, the severing band saw and finally a bin for receiving and catching the processed heads;

Fig. 2 is a view of this invention in the vicinity of the band saw illustrating the saw and underlying bin for catching the severed heads;

Fig. 3 is a view of the endless belt conveyor causing inversion of the jigs with the heads being thrown from the jigs remotely into a bin for further processing; and,

Figs. 4A, 4B and 4C are views of the jig of this invention illustrating in Figs. 4A and 4B the particular shape for holding and maintaining sockeye salmon fish heads and in Fig. 4C a fish head within the jig.

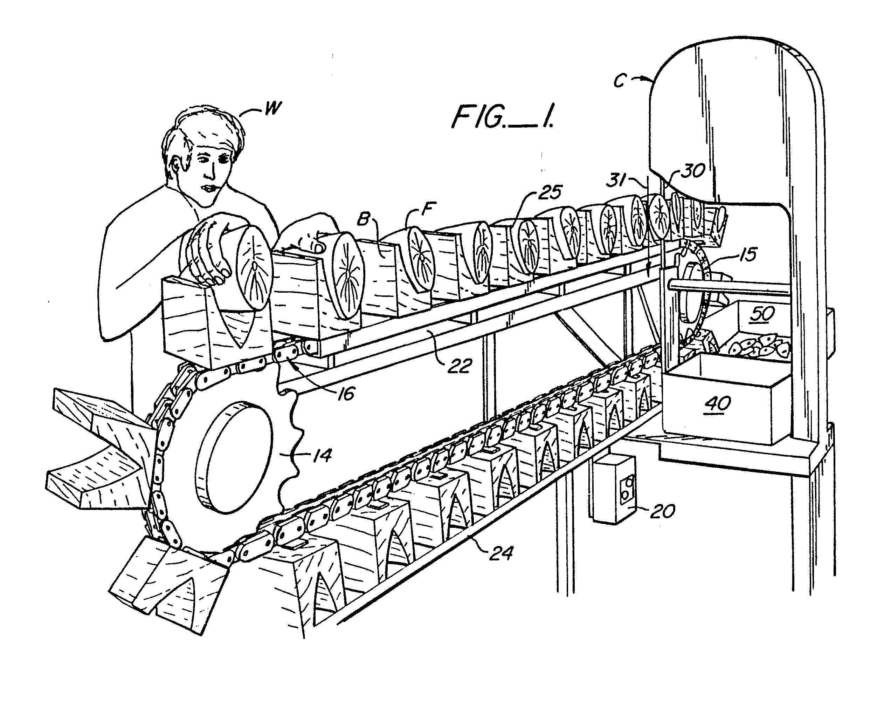

Referring to Fig. 1, the machine of this invention can be generally described. Two chain sprockets 14, 15 have an endless chain belt 16 passed therebetween and driven at a constant rate in the order of up to 20 feet per minute, drive is through a mechanism (not shown) and is operable at a controller 20.

Between sprockets 14, 15, there is provided an upper raceway 22 and a lower raceway 24. Upper raceway 22 supports the bottom of the chain and the detached blocks B for holding the fish heads F. Lower raceway 24 supports the bottom edge of the blocks B as they return.

A band saw C of conventional butchershop design is located adjacent the cutting end of the blocks 25. The saw blade 30 typically moves downwardly in the direction of arrow 31 to effect cutting severed steaks from the fish heads. The severed steaks drop into bin 40. The remaining heads are discharged into a head bin 50 at the end of the conveyor.

Operation may be simply stated. A worker W loads severed heads into the receiving blocks B. In the preferred embodiment of sockeye salmon, the fish heads are each loaded so that the gil cover of the fish head registers to the cutting end 25 of the block B as will herein be discussed with more detail. Block B is tailored for receiving the fish. This block and its specific contour in effect assists the worker W in registering the fish heads with rapidity.

Having set forth the overall configuration of the machine, the specific contour of the block B will now be discussed.

In the case of sockeye salmon, block B is six inches long, five inches high and four inches wide. It is preferably of a wood, the wood having a grainy characteristic when worked with an exposed rough and absorbant surface. The reader will realize that these latter characteristics are important. Fish are covered with a natural mucous. Moreover, severed fish heads accumulate slime and other fish wastes which render them extremely difficult to handle. It is therefore imperative that the blocks have a tendency to grasp the fish heads.

To this end, the block has an overall V-shaped groove 60 carved therein. This groove has a uniform upper opening 61 in the order of three inches. This opening remains uniform along the top of the block from the rear or cutting end 25 of the block to and towards the front end of the block.

The bottom of the V, however, tapers. It tapers upwardly and forwardly from the cutting edge of the block 25 to the head edge of the block 26. This taper in the case of sockeye salmon is at a 15° angle.

At the forward edge of the block, where the bottom portion 62 of the V meets the sides, the side edges of the cut in the block are linear. This may be seen at edges 64. At the rearward edge of the block, the cuts are not linear. Instead, they are arcuate and have negative or concave curvature with the upper portion having a larger radius of curvature than the lower portion. Thus, it can be seen edges 65 taper from a large radius of curvature at 65a to a shorter radius of curvature at 65b. Stated in other terms, as the V penetrates into the block, the curvature becomes more pronounced at the side edges thereof.

Between the cutting edge of the block 25 and the snout edge of the block 26, the walls are more or less provided with a linear shape in the interior of the V. This linear shape imparts the overall contour.

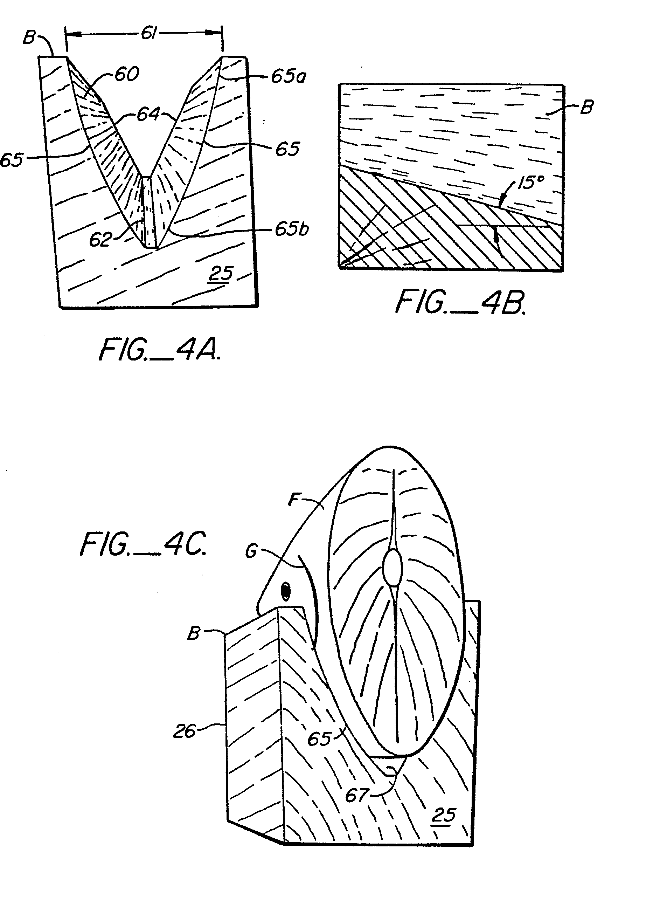

Referring to Fig. 4C, a fish head F can be seen mounted and wedged into the block of Fig. 4C. It will be seen that the gil cover G is positioned so that it registers just forwardly of the cutting edge 25 of the block at the V-shaped boundary 65 defined on the rearward portion of the block 25.

It will be appreciated that in a canning environment, it is absolutely imperative that cleanliness be maintained. We preferably steam clean the wooden blocks herein illustrated as frequently as possible, at least at four hour intervals. Preferably, such steam cleaning occurs at two hour intervals.

We have further found the wood blocks utilized with this invention when weathered by such steam cleaning maintain an ideal porosity and outward granular texture so that gripping of the fish heads is optimized. Whereas in many cannery surfaces, wood is to be avoided because of its natural wearing characteristics, especially when subjected to repeated steam cleaning. Here, however, steam cleaning in actual fact cooperates to maintain the wooden blocks with an ideal coefficient of friction for maintaining the fish heads in place.

It should also be realized that the particular shape which we disclose here is advantageous for salmon. This shape has been found to be self-assisting to the worker W when he effectively registers the salmon downwardly at the gil cover into the block B. Heads that are placed too far rearwardly literally fall from the block of this design. Heads placed too far forwardly will not sit upright. Instead, they will seat themselves in the block with angularity. This angularity gives not only a visual cue, but a tactile cue to the worker.

The job of loading fish heads can be somewhat tedious. Frequent worker rotation is required. Because of this frequent worker rotation, the positioning of the heads in the machine has to be largely assisted by the blocks and by tactile as well as visual cues in order to permit rapid worker training and frequent personnel rotation.

It should be noted that with the particular design of block herein disclosed, heads of widely differing sizes fit within one block. It has been found that smaller fish wedge into and fit entirely within the bottom portion of the overall V-shape groove of the block. Larger fish do not penetrate fully to the bottom. Instead, they leave a small interstitial area between the bottom of the block at the cutting edge of the bottom of the V. This area 67 is shown in the example of Fig. 4C.

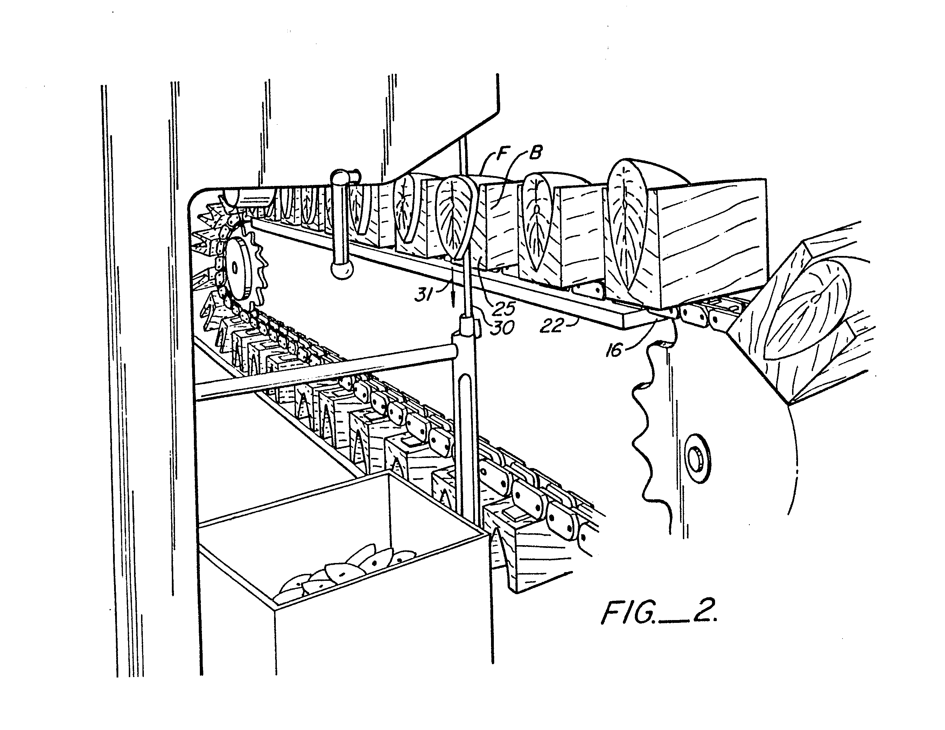

It should be observed that there is a cooperation between the band saw C and its severing blade 30 and the passing blocks. This can best be seen with respect to Fig. 2.

Referring to Fig. 2, an alternate perspective view of the fish head severing device of this invention is illustrated. Blocks B with fish heads F loaded therein are conveyed on the chain 16 over a raceway 22. Band saw blade 30 moves downwardly at 31 and effects severing of the steaks on a sequential basis.

Preferably, the cutting end of the blocks 25 passes approximately 1/8 of an inch from the band saw blade 30. I have found that where this distance is too great, the fish heads cantilever out too far from the blocks B and are dislodged by the friction forces of the blade 30. Where the blocks are too close, meet jams between the cutting ends of the blocks 25 and the blade 30 presenting an imperfect cut and imparting undue friction.

It should be noted that we specify with good reason that a band saw be used. We have found that friction forces generated between the saw at places other than the cutting edge tend to dislodge the steaks from any type of device such as my blocks B which are used to hold them. For example, circular saws such as those for slicing roasts found in butcher shops, have been found not preferred and even unacceptable.

Moreover, we have found it preferred to have the cutting edge of the band saw sever from the open and upward end of the V-shape groove of the blocks B downwardly to and towards the bottom of the V-shape groove of the blocks B. This action helps wedge the fish head F downwardly into and towards the bottom of the V-shape groove. This wedging prevents inadvertent dislodgement of the fish head during the steak salvaging process of our invention. In short, the illustrated saw is preferred for good reason.

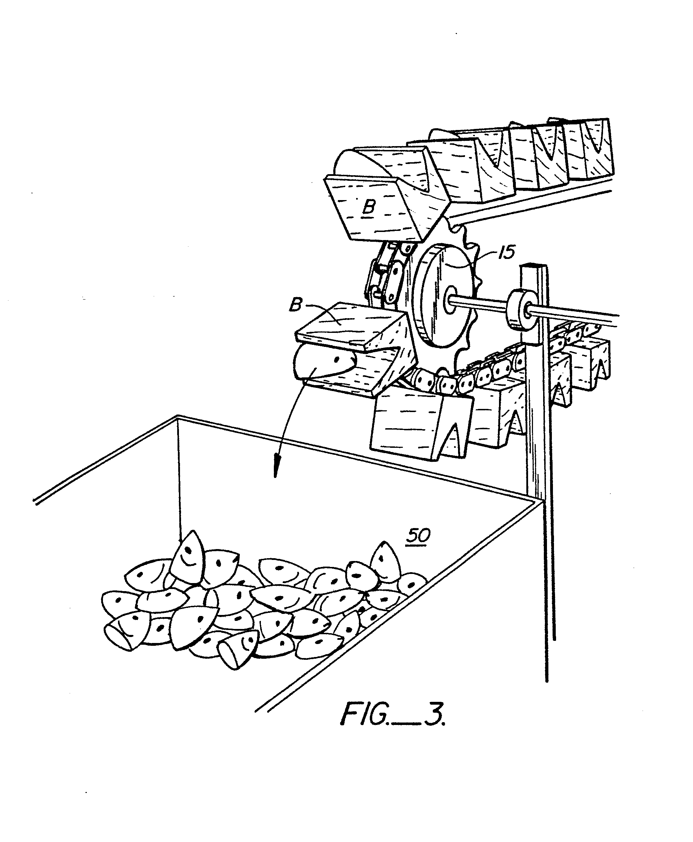

Referring to Fig. 3, it will be seen that dislodgement of the heads from the blocks of our invention is automatic. It will be remembered that the endless belt conveys the fish heads at a preferred speed in the order of 20 feet per minute. When the blocks after salvaging of the steaks reach sprocket 16, a centrifugal velocity is imparted to the blocks and they pass around the sprocket 16. This velocity added to their linear velocity causes the heads F to be thrown from the blocks into the fish head receiving bin 50. This throwing action occurs even though the forces of cutting utilized with the saw effect some wedging of the fish heads downwardly to and into the blocks B.

It will be appreciated that our invention may admit of modification. For example, and although I claim for sockeye salmon utility of the specific shape of block herein shown for the sockeye industry. other shaped blocks can be adapted by others skilled in the art to the specifics of their fish processing industry.

-1-

0071418

CLAIMS:

1. Apparatus for cutting excess meat from fish heads comprising in combination: a saw having a moving blade; a plurality of jigs, each jig having a generally V-shaped groove with a female concavity therein for receiving in male and fitting relationship successive fish heads placed therein; said jigs terminating in a cutting end for having the snout of a fish head confined with said jig and meat on said fish head cantilevered outwardly and beyond said fish head as confined within said jig; means for conveying said jig at said cutting end past said band saw whereby severing of said cantilevered portion of said fish head beyond the cutting edge of said block occurs.

2. The invention of Claim 1, wherein each said jig includes a wooden block having a V-shaped groove therein for securing said fish head.

3. The invention of Claim 1 or Claim 2, wherein said conveying means comprises an endless belt.

4. The invention of Claim 3, wherein said conveying means comprises an endless belt with a first and upper flight of said jigs passing to said saw for severance of meat from said fish heads and a second and lower flight of said jigs passing from said saw.

5. Process for severing meat from fish heads; comprising providing a wooden block having a fish head receiving concavity configured therein; providing a band saw for severing meat from said fish heads, placing said saw just beyond a terminus of said wooden block; conveying said block along a conveyance path past a saw so that said saw passes immediate to said saw; placing fish heads in said blocks prior to passage by said saw with the gil cover of said fish heads registered within said blocks and the severed portions of said fish heads to and towards said saw.

6.    The process of Claim 5 and including the step of inverting said block to discharge said fish head after said conveying step.

7.    The process of Claim 5 or Claim 6, wherein said band saw has a continuously downwardly moving blade.

8.    A jig for addressing a fish head having salvagable meat thereon for sawing comprising in conbination:    a wooden block;    said block having a V-shaped groove configured therein, said V-shaped groove extending from one end of said block to the opposite end of said block, said blcok comprising wood having a fibrous and unpolished surface exposed to receive said fish head, said V-shaped groove tapering in female relationship to conform to the male shape of the head of said fish for receiving the snout of said fish within said block and cantilevering to an edge of said block the head portion having the meat to be salvaged therefrom.

9.    The invention of Claim 8, wherein said V-shaped groove tapers from a lower and deeper portion at the cutting edge of said block to an upper and shallower V-shaped groove towards the snout of said fish when disposed within said block.

10.    The invention of Claim 10, wherein the inside surface of said jig is covered with wood.

LLOYD WISE, TREGEAR & CO.
NORMAN HOUSE 105-109 STRAND
LONDON, WC2R 0AE

FIG.__1.

FIG._2.

FIG.__3.

*FIG.\_4A.*

*FIG.\_4B.*

*FIG.\_4C.*